# EUROPEAN PATENT SPECIFICATION

(11) **EP 3 239 478 B1**
(45) Date of publication and mention of the grant of the patent: **25.08.2021**
(21) Application number: 17168271.9
(22) Date of filing: 26.04.2017
(51) Int. Cl.: F01D 25/00, F02C 6/08, F02C 7/18, F02C 7/32, F02C 7/36

(54) **COMBINED DRIVE FOR COOLING AIR USING COOLING COMPRESSOR AND AIRCRAFT AIR SUPPLY PUMP**
KOMBINIERTER ANTRIEB FÜR DIE LUFT-VERDICHTER DER JEWEILIGEN KÜHLSYSTEME FÜR KABINENKLIMATISIERUNG UND KÜHLUNG DES TURBINENABSCHNITTS
ENTRAÎNEMENT COMBINÉ POUR REFROIDIR DE L'AIR AU MOYEN D'UN COMPRESSEUR DE REFROIDISSEMENT ET ALIMENTATION EN AIR DE L'AÉRONEF

(30) Priority: 26.04.2016 US 201615138269
(43) Date of publication of application: 01.11.2017
(73) Proprietor: Raytheon Technologies Corporation, Farmington, CT 06032 (US)
(72) Inventor: SUCIU, Gabriel L., Glastonbury, CT 06033 (US); MERRY, Brian D., Andover, CT 06232 (US); CHANDLER, Jesse M., South Windsor, CT 06074 (US)
(74) Representative: Dehns

(56) References cited:
- EP-A1- 3 121 411
- EP-A2- 2 557 038
- EP-A2- 2 584 172
- DE-A1-102012 208 263
- US-A1- 2013 164 115

## Description

### BACKGROUND

This application relates to improvements in providing cooling air from a compressor section to a turbine section in a gas turbine engine and to providing environmental air to an aircraft cabin.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the high compressor discharge has been tapped, passed through a heat exchanger, which may sit in the bypass duct and then delivered into the turbine section. The air from the downstream most end of the compressor section is at elevated temperatures.

It is also known to supply compressed air from a gas turbine engine through an environmental or cabin air supply system for various uses on an aircraft, such as to supply air to the aircraft cabin. In general, such systems have utilized a turbine driven pump, which is powered by the compressed air, and which also then moves the air to its downstream use.

Documents EP 2 557 038, DE 10 2012 208263 and EP 2 584 172 disclose cooling systems for aircraft with a gas turbine engine.

### SUMMARY

According to a first aspect of the present invention, there is provided a combined intercooling system and cabin air supply system as set forth in claim 1.

In an embodiment, the cooling compressor rotor is a centrifugal compressor impeller.

In another embodiment according to any of the previous embodiments, air temperatures at the downstream discharge of the high pressure compressor are greater than or equal to 1350°F (732°C).

In another embodiment according to any of the previous embodiments, the turbine section driving a bull gear, the bull gear further driving the impeller of the cooling compressor.

In another embodiment according to any of the previous embodiments, the second tap also tapping air from at least one of the more upstream locations in the compressor section.

According to a further aspect of the present invention, there is provided a gas turbine engine as set forth in claim 5.

In another embodiment according to any of the previous embodiments, a drive shaft drives a drive gear for the cooling compressor rotor, and the drive gear for the cooling compressor rotor driving a drive gear for the cabin air supply rotor.

In another embodiment according to any of the previous embodiments, an idler gear is driven by the drive shaft to in turn drive the drive gear for the cooling compressor.

These and other features may be best understood from the following drawings and specification.

### BRIEF DESCRIPTION OF THE DRAWINGS

Figure 1 schematically shows an embodiment of a gas turbine engine.
Figure 2 shows a prior art engine.
Figure 3 shows one example engine.
Figure 4 is a graph illustrating increasing temperatures of a tapped air against the work required.
Figure 5 shows a detail of the example engine of Figure 3.
Figure 6 shows a further detail of the example engine of Figure 5.
Figure 7 shows an example of a cabin air supply system.
Figure 8 shows an example of a combined drive for a cooling compressor and a pump for a cabin air supply system.
Figure 9 schematically shows details of the pump for the cabin air supply system of Figure 8.
Figure 10 shows details of the combined drive system of Figure 8.

### DETAILED DESCRIPTION

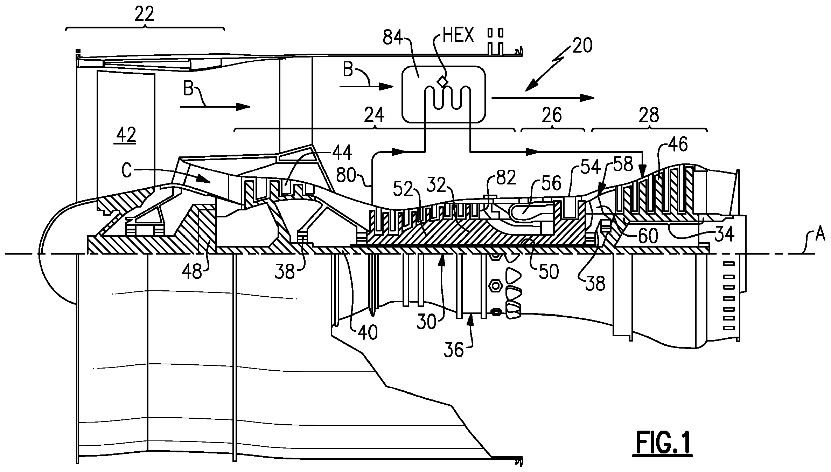

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a two-spool turbofan gas turbine engine, it should be understood that the concepts described herein are not limited to use with two-spool turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5} (where °R = K × ⁹/₅). The "Low corrected fan tip speed", as disclosed herein according to one non-limiting embodiment, is less than about 1150 ft/second (350.5 m/s).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the discharge 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B.

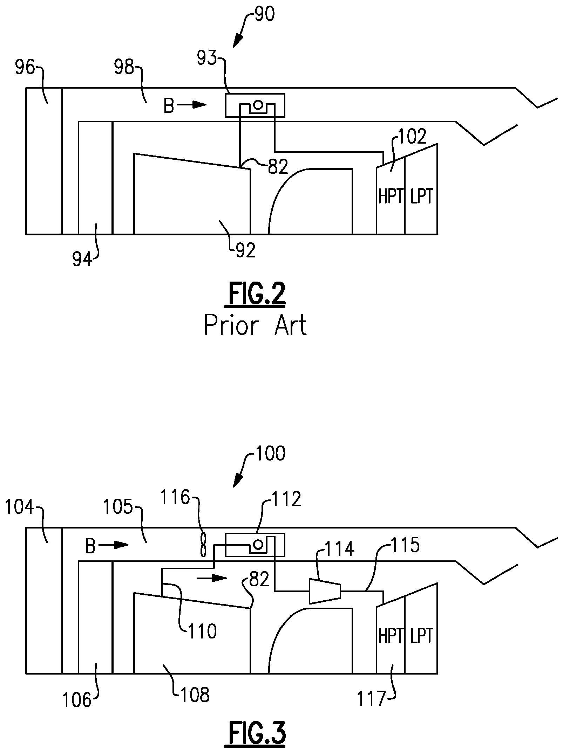

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point, or discharge 82 of the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 92 is known as station 3. The temperature T3 and pressure P3 at station 3 are both very high.

In future engines, T3 levels are expected to approach greater than or equal to 1350°F. Current heat exchanger technology is becoming a limiting factor as they are made of materials, manufacturing, and design capability which have difficulty receiving such high temperature and pressure levels.

Figure 3 shows an engine 100 coming within the scope of this disclosure. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 may be positioned upstream of the heat exchanger 112 as illustrated. The main fan 104 may not provide sufficient pressure to drive sufficient air across the heat exchanger 112. The auxiliary fan will ensure there is adequate air flow in the circumferential location of the heat exchanger 112.

In one embodiment, the auxiliary fan 116 may be variable speed, with the speed of the fan varied to control the temperature of the air downstream of the heat exchanger 112. As an example, the speed of the auxiliary fan may be varied based upon the operating power of the overall engine.

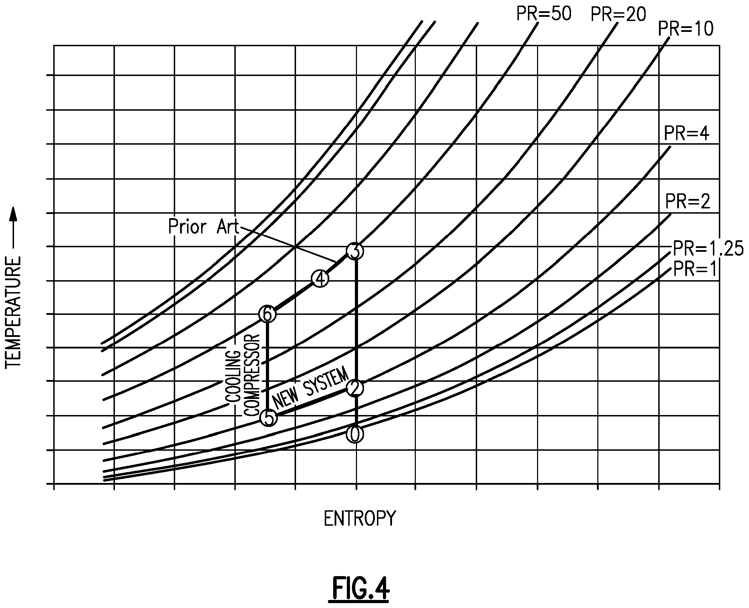

Referring to Figure 4, a temperature/entropy diagram illustrates that a lower level of energy is spent to compress air of a lower temperature to the desired P3 pressure level. Cooler air requires less work to compress when compared to warmer air. Accordingly, the work required to raise the pressure of the air drawn from an early stage of the compressor section is less than if the air were compressed to the desired pressure within the compressor section. Therefore, high pressure air at P3 levels or higher can be obtained at significantly lower temperatures than T3. As shown in Figure 4, to reach a particular pressure ratio, 50 for example, the prior system would move from point 2 to point 3, with a dramatic increase in temperature. However, the disclosed or new system moves from point 2 to point 5 through the heat exchanger, and the cooling compressor then compresses the air up to point 6. As can be appreciated, point 6 is at a much lower temperature than point 3 while being at the same pressure as point 3.

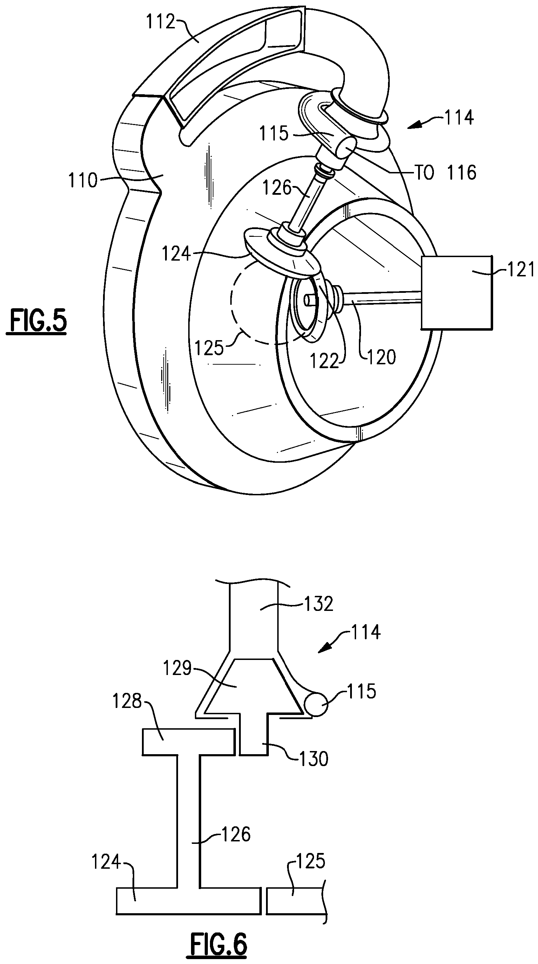

Figure 5 shows a detail of compressor 114 having an outlet into conduit 115. A primary tower shaft 120 drives an accessory gearbox 121. A shaft 126 drives a compressor rotor within the compressor 114. The shafts 120 and 126 may be driven by a bull gear 125 driven by a turbine rotor, and in one example, with a high pressure compressor rotor.

Figure 6 shows an example wherein a gear 128 is driven by the shaft 126 to, in turn, drive a gear 130 which drives a centrifugal compressor impeller 129. An input 132 to the compressor impeller 129 supplies the air from the tap 110. The air is compressed and delivered into the outlet conduit 115.

By providing a gear ratio multiplier between the compressor impeller 129 and the high spool bull gear 125, the compressor impeller may be driven to operate an optimum speed. As an example, the gear ratio increase may be in a range of 5:1 - 8:1, and in one embodiment, 6:1.

Details of the engine, as set forth above, may be found in co-pending U.S. Patent Application Serial No. 14/695,578.

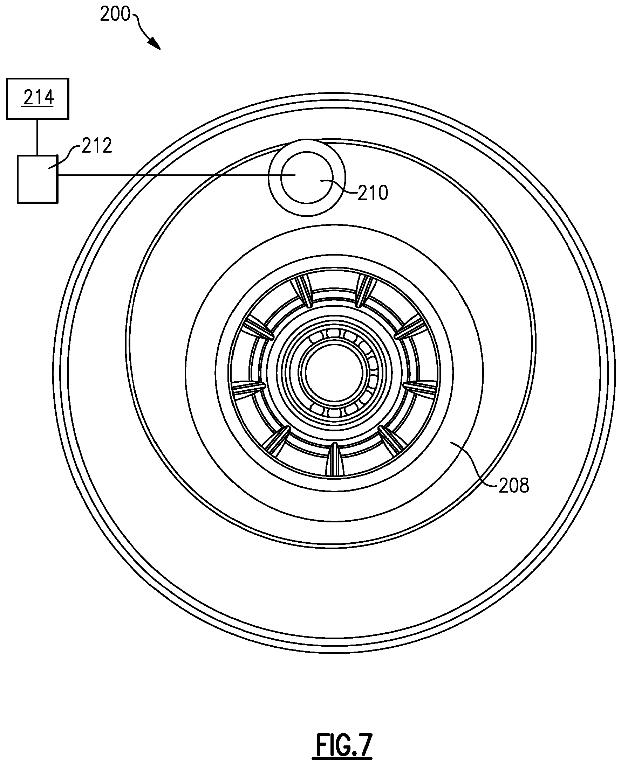

Figure 7 shows a system 200 for tapping compressed air and delivering it to uses on an aircraft, such as an air supply for an aircraft cabin. A manifold 208 communicates with the engine flowpath compressed air. This compressed air may be at an intermediate point in the compressor section 24 of the engine of Figure 1. The air passes into a manifold 208 then passes into an outlet 210, and may be further compressed by a turbine driven pump 212 to the use 214, which may be a system for treating the air for use in an aircraft cabin.

The system as shown in Figure 7 is described in more detail in co-pending PCT application PCT/US2014/056200, entitled Integrated Environmental Control System Manifold.

In the prior art, the compressed air typically drives a turbine which drives a pump, and that air then passes to the pump (combined unit shown as 212), where it is then moved to the use 214.

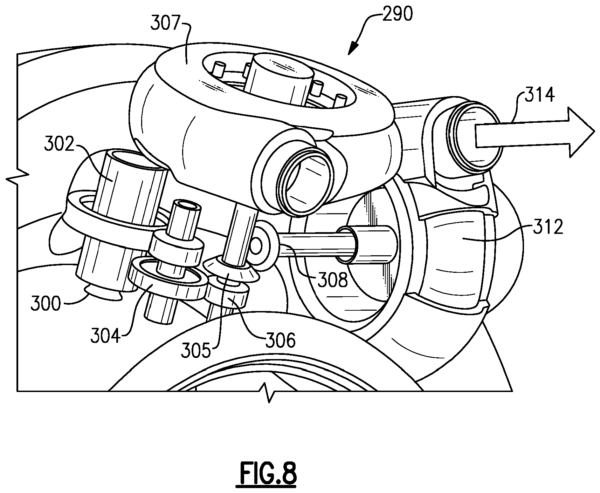

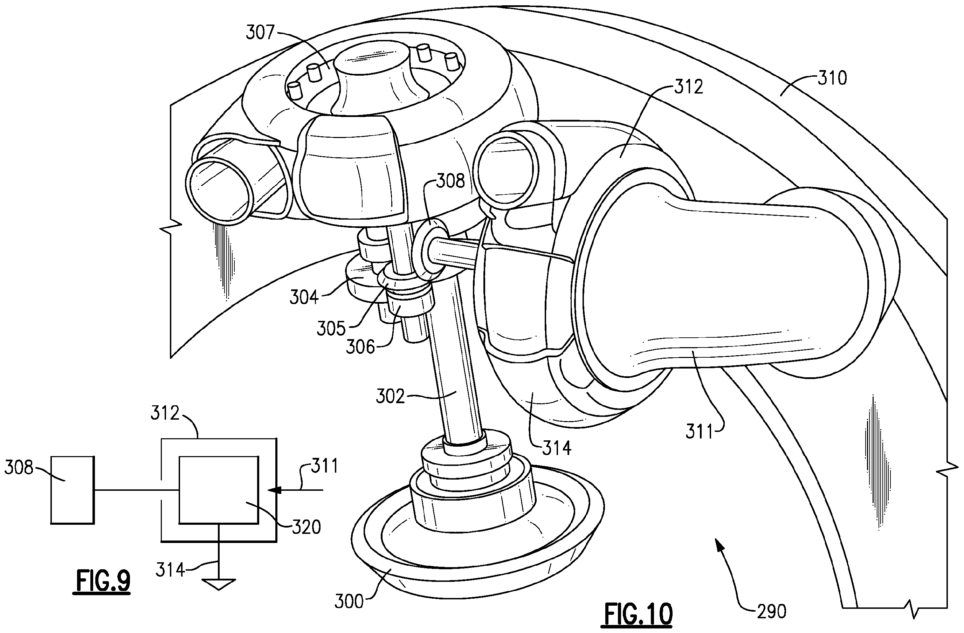

Figure 8 shows a combined drive system 290 for driving a cooling compressor such as shown in the embodiments of Figures 3-6, and further for replacing the turbine driven pump, and providing a mechanically driven pump for the cabin air supply system. As shown, a high speed take-off 300 has an input shaft 302 which drives an idler gear 304 that may change the speed delivered into an input drive 306 for a cooling compressor 307. Again, compressor 307 may operate as in the embodiments of Figures 3-6. The gear 306 rotates with gear 305 to also drive a gear 308 to drive a pump within a pump module 312 that takes air from a manifold 310 (see Fig. 10) into a pipe 311 (see Fig. 10), and delivers that air to an outlet 314 which can then pass to the cabin air supply system 214.

This provides a drive for both the compressor and the pump with a single input, and eliminates the need for a turbine driven pump as has been utilized in the past for the cabin air supply system.

Figure 9 schematically shows details of the pump 312 having the inlet pipe 311 passing to a pump impeller 320 which is driven with the gear 308 to deliver the air to the outlet 314.

Figure 10 shows another view of the combined drive 290, and the components 300, 302, 304-308, 311, 312 and 314.

Although embodiments of this disclosure have been illustrated and described, a worker of ordinary skill in this art would recognize that modifications would come within the scope of this disclosure. For that reason, the following claims should be studied to determine the scope and content of this disclosure.

## Claims

1. A combined intercooling system and cabin air supply system (290) for an aircraft with a gas turbine engine comprising:
a first tap (110), a heat exchanger (112) and a cooling compressor (114), the first tap (110) in use tapping air, passing the tapped air through the heat exchanger (112) and then to the cooling compressor (114), the cooling compressor (114) compressing air downstream of the heat exchanger (112), and configured to deliver air to a use;
a second tap (208) and a cabin air pump (212), the second tap (208) tapping air and passing said air across the cabin air pump (212), and configured to deliver the air to a cabin of the aircraft receiving the system (290), wherein the cooling compressor (114) includes a rotor, and said cabin air pump (212) includes a rotor; and
a take-off (300) driving both said cooling compressor rotor and said cabin air supply rotor.

2. The combined intercooling system and cabin air supply system (290) as set forth in claim 1, wherein a drive shaft (302) drives a first drive gear (306) for said cooling compressor rotor, and said first drive gear (306) for said cooling compressor rotor driving a second drive gear (308) for said cabin air supply rotor.

3. The combined intercooling system and cabin air supply system (290) as set forth in claim 2, wherein an idler gear (304) is driven by said drive shaft (302) to in turn drive said first drive gear (306) for said cooling compressor (114).

4. The combined intercooling system and cabin air supply system (290) as set forth in any preceding claim, wherein the cooling compressor rotor is a centrifugal compressor impeller.

5. A gas turbine engine (100) comprising:
a main compressor section having a high pressure compressor (108) with a downstream discharge, the main compressor section furthermore having more upstream locations;
a turbine section having a high pressure turbine (117); and
a combined intercooling system and cabin air supply system (290) as set forth in any preceding claim, wherein the first tap (110) delivers air into the high pressure turbine (117), the second tap (208) taps air from said compressor section and the take-off (300) is driven with said turbine section to in turn drive both said cooling compressor rotor and said cabin air supply rotor.

6. The gas turbine engine (100) as set forth in claim 5, wherein air temperatures at the downstream discharge of the high pressure compressor (108) are greater than or equal to 1350°F (732°C).

7. The gas turbine engine (100) as set forth in claim 5 or 6, wherein said second tap (310) is configured to tap air from at least one of the more upstream locations in the compressor section.

8. The gas turbine engine (100) as set forth in claim 5, 6 or 7, wherein the turbine section drives a bull gear (125), and the bull gear (125) further drives the rotor of the cooling compressor.

## Patentansprüche

1. Kombiniertes Zwischenkühlsystem und Kabinenluftversorgungssystem (290) für ein Flugzeug mit einem Gasturbinentriebwerk, umfassend:
eine erste Abzapfung (110), einen Wärmetauscher (112) und einen Kühlkompressor (114), wobei die erste Abzapfung (110) in Verwendung Luft abzapft, die abgezapfte Luft durch den Wärmetauscher (112) und dann zu dem Kühlkompressor (114) leitet, wobei der Kühlkompressor (114) Luft stromabwärts des Wärmetauschers (112) komprimiert und dazu konfiguriert ist, Luft einer Verwendung zuzuführen;
eine zweite Abzapfung (208) und eine Kabinenluftpumpe (212), wobei die zweite Abzapfung (208) Luft abzapft und die Luft über die Kabinenluftpumpe (212) leitet und dazu konfiguriert ist, die Luft einer Kabine des Flugzeugs, das das System (290) aufnimmt, zuzuführen, wobei der Kühlkompressor (114) einen Rotor beinhaltet und die Kabinenluftpumpe (212) einen Rotor beinhaltet; und
einen Nebenabtrieb (300), der sowohl den Kühlkompressorrotor als auch den Kabinenluftversorgungsrotor antreibt.

2. Kombiniertes Zwischenkühlsystem und Kabinenluftversorgungssystem (290) nach Anspruch 1, wobei eine Antriebswelle (302) ein erstes Antriebsrad (306) für den Kühlkompressorrotor antreibt und das erste Antriebsrad (306) für den Kühlkompressorrotor ein zweites Antriebsrad (308) für den Kabinenluftversorgungsrotor antreibt.

3. Kombiniertes Zwischenkühlsystem und Kabinenluftversorgungssystem (290) nach Anspruch 2, wobei ein Zwischenrad (304) durch die Antriebswelle (302) angetrieben wird, um wiederum das erste Antriebsrad (306) für den Kühlkompressor (114) anzutreiben.

4. Kombiniertes Zwischenkühlsystem und Kabinenluftversorgungssystem (290) nach einem der vorhergehenden Ansprüche, wobei der Kühlkompressorrotor ein Zentrifugalkompressorlaufrad ist.

5. Gasturbinentriebwerk (100), umfassend:
einen Hauptkompressorabschnitt, der einen Hochdruckkompressor (108) mit einem stromabwärtigen Auslauf aufweist, wobei der Hauptkompressorabschnitt des Weiteren mehrere stromaufwärtige Stellen aufweist;
einen Turbinenabschnitt, der eine Hochdruckturbine (117) aufweist; und
ein kombiniertes Zwischenkühlsystem und Kabinenluftversorgungssystem (290) nach einem der vorhergehenden Ansprüche, wobei die erste Abzapfung (110) Luft in die Hochdruckturbine (117) zuführt, die zweite Abzapfung (208) Luft aus dem Kompressorabschnitt abzapft und der Nebenabtrieb (300) mit dem Turbinenabschnitt angetrieben wird, um wiederum sowohl den Kühlkompressorrotor als auch den Kabinenluftversorgungsrotor anzutreiben.

6. Gasturbinentriebwerk (100) nach Anspruch 5, wobei Lufttemperaturen an dem stromabwärtigen Auslauf des Hochdruckkompressors (108) größer oder gleich 1350 °F (732 °C) sind.

7. Gasturbinentriebwerk (100) nach Anspruch 5 oder 6, wobei die zweite Abzapfung (310) dazu konfiguriert ist, Luft von mindestens einer der mehreren stromaufwärtigen Stellen in dem Kompressorabschnitt abzuzapfen.

8. Gasturbinentriebwerk (100) nach Anspruch 5, 6 oder 7, wobei der Turbinenabschnitt ein Zentralrad (125) antreibt und das Zentralrad (125) ferner den Rotor des Kühlkompressors antreibt.

## Revendications

1. Système combiné de refroidissement intermédiaire et système d'alimentation en air de cabine (290) pour un aéronef avec un moteur à turbine à gaz comprenant :
un premier robinet (110), un échangeur de chaleur (112) et un compresseur de refroidissement (114), le premier robinet (110) en cours d'utilisation prélevant de l'air, faisant passer l'air prélevé à travers l'échangeur de chaleur (112) puis vers le compresseur de refroidissement (114), le compresseur de refroidissement (114) comprimant l'air en aval de l'échangeur de chaleur (112), et étant configuré pour distribuer de l'air à utiliser ;
un second robinet (208) et une pompe à air de cabine (212), le second robinet (208) prélevant de l'air et faisant passer ledit air à travers la pompe à air de cabine (212), et étant configuré pour distribuer l'air à une cabine de l'aéronef recevant le système (290), dans lequel le compresseur de refroidissement (114) comporte un rotor, et ladite pompe à air de cabine (212) comporte un rotor ; et
une prise (300) entraînant à la fois ledit rotor de compresseur de refroidissement et ledit rotor d'alimentation en air de cabine.

2. Système combiné de refroidissement intermédiaire et système d'alimentation en air de cabine (290) selon la revendication 1, dans lequel un arbre d'entraînement (302) entraîne un premier engrenage d'entraînement (306) pour ledit rotor de compresseur de refroidissement, et ledit premier engrenage d'entraînement (306) pour ledit rotor de compresseur de refroidissement entraînant un second engrenage d'entraînement (308) pour ledit rotor d'alimentation en air de cabine.

3. Système combiné de refroidissement intermédiaire et système d'alimentation en air de cabine (290) selon la revendication 2, dans lequel un engrenage intermédiaire (304) est entraîné par ledit arbre d'entraînement (302) pour entraîner à son tour ledit premier engrenage d'entraînement (306) pour ledit compresseur de refroidissement (114).

4. Système combiné de refroidissement intermédiaire et système d'alimentation en air de cabine (290) selon une quelconque revendication précédente, dans lequel le rotor de compresseur de refroidissement est une roue de compresseur centrifuge.

5. Moteur à turbine à gaz (100) comprenant :
une section de compresseur principale ayant un compresseur haute pression (108) avec une décharge en aval, la section de compresseur principale ayant en outre plus d'emplacements en amont ;
une section de turbine ayant une turbine haute pression (117) ; et
un système combiné de refroidissement intermédiaire et un système d'alimentation en air de cabine (290) selon une quelconque revendication précédente, dans lequel le premier robinet (110) distribue de l'air dans la turbine haute pression (117), le second robinet (208) prélève de l'air depuis ladite section de compresseur et la prise (300) est entraînée avec ladite section de turbine pour entraîner à son tour à la fois ledit rotor de compresseur de refroidissement et ledit rotor d'alimentation en air de cabine.

6. Moteur à turbine à gaz (100) selon la revendication 5, dans lequel les températures de l'air à la décharge en aval du compresseur haute pression (108) sont supérieures ou égales à 1 350 °F (732 °C).

7. Moteur à turbine à gaz (100) selon la revendication 5 ou 6, dans lequel ledit second robinet (310) est configuré pour prélever de l'air depuis au moins l'un des emplacements les plus en amont dans la section de compresseur.

8. Moteur à turbine à gaz (100) selon la revendication 5, 6 ou 7, dans lequel la section de turbine entraîne un engrenage principal (125), et l'engrenage principal (125) entraîne en outre le rotor du compresseur de refroidissement.
